# EUROPEAN PATENT SPECIFICATION

(11) **EP 1 724 894 B1**
(45) Date of publication and mention of the grant of the patent: **01.05.2013**
(21) Application number: 06113986.1
(22) Date of filing: 16.05.2006
(51) Int. Cl.: H02G 3/00, H02G 3/18

(54) **Recessed tower for floor-mounted electrical installations, with reinforced cover**
Einbausäule für am Boden angeordnete elektrische Installationen, mit verstärktem Deckel
Boîtier de sol pour des installations électriques montées au sol, avec couvercle renforcé

(30) Priority: 17.05.2005 IT TO20050335
(43) Date of publication of application: 22.11.2006
(73) Proprietor: Bticino S.p.A., 20154 Milano (IT)
(72) Inventor: Ricciardi, Rocco, I-21046 Malnate (Varese) (IT); Rocereto, Pietro, I-21040 Sumirago (Varese) (IT)
(74) Representative: Deambrogi, Edgardo

(56) References cited:
- DE-A1- 19 625 187
- DE-U1- 29 712 728

## Description

The present invention concerns in general the field of electrical installations, and in particular a recessed tower for floor-mounted electrical installations.

More specifically, the invention concerns a tower of the type mentioned in the preamble of claim 1.

Recessed floor-mounted towers according to the prior art generally comprise a cover made from rigid plastic material suitable for supporting the weight of a person or of light vehicles travelling on them without deformation.

A drawback of such towers is represented by the mechanical fragility of the cover in conditions in which it must support heavy loads. This can occur, for example, in the case of towers installed on floors of industrial buildings, crossed by trucks or other vehicles for moving heavy loads, where the loads applied easily reach hundreds of kilograms.

DE 196 25 187 discloses a floor-mounted outlet box with a reinforced cover hinged to the box frame.

The present invention sets itself the task of providing a satisfactory solution to such a drawback of the prior art, i.e. to provide a recessed floor-mounted tower suitable for supporting heavy loads, and in particular loads in the order of hundreds of kilograms, at the same time ensuring ease and safety of access for the operators called to intervene on the electrical devices contained therein.

According to the present invention such purposes are accomplished thanks to a tower having the characteristics outlined in claim 1.

Particular embodiments are outlined in the dependent claims.

Further characteristics and advantages of the invention shall be outlined in greater detail in the following detailed description of an embodiment thereof, given as a non-limiting example, with reference to the attached drawings, in which:
figure 1 is an overall perspective view of a recessed floor-mounted tower according to the invention, in a state with the cover open;

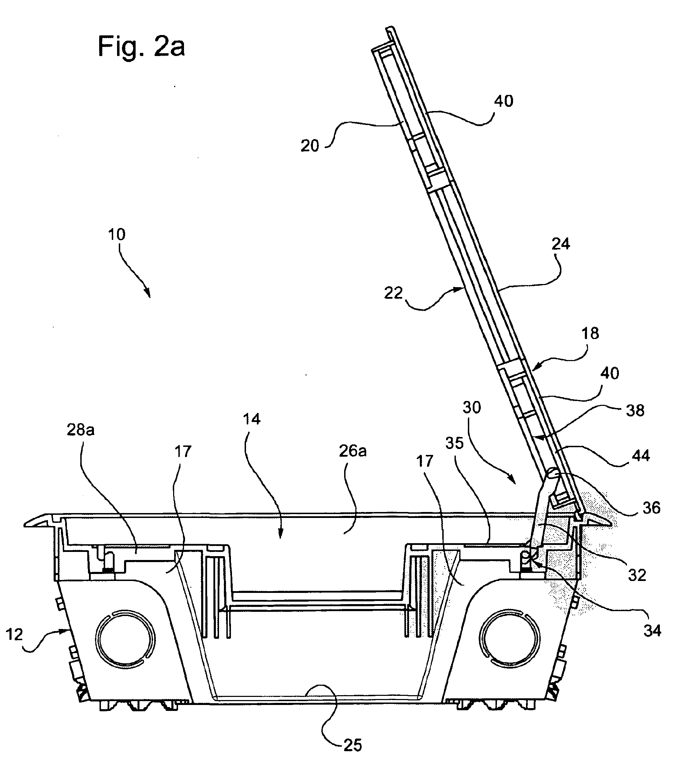

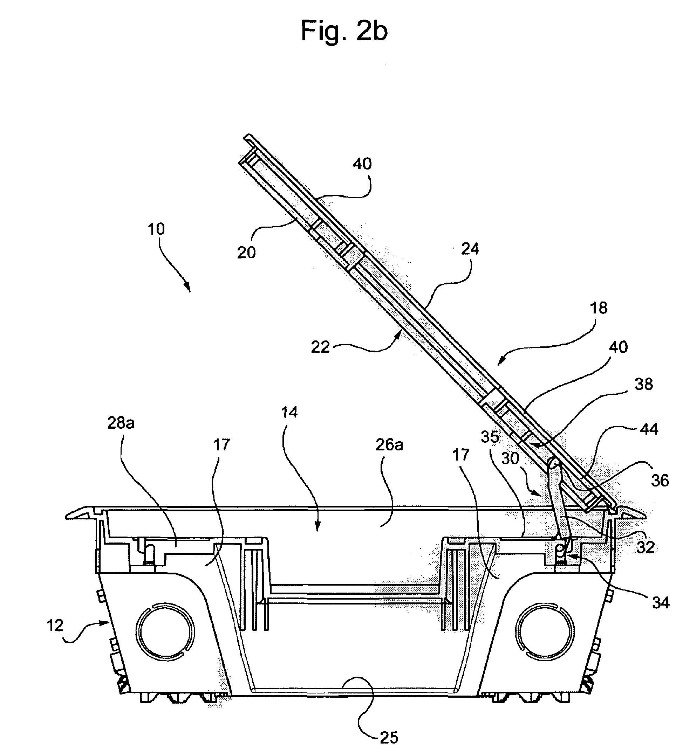

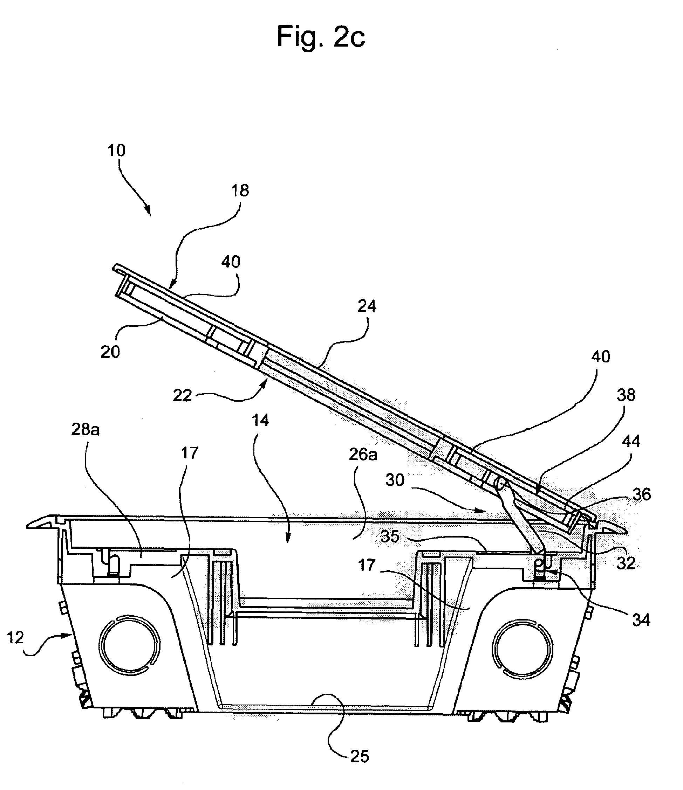

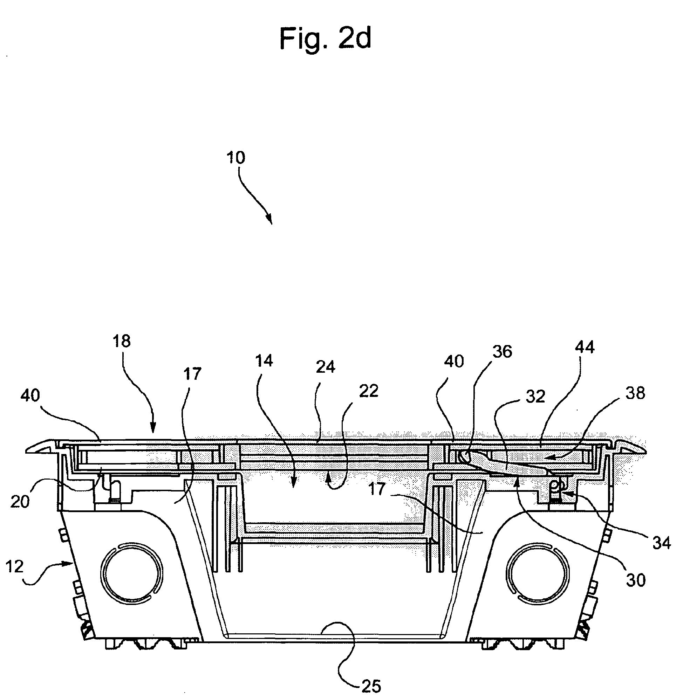

figures 2a-2d are side views partially in section of the tower of figure 1 with the cover respectively in the open position, in two partially open positions and in the closed position;
figures 3a-3d show a detailed view of a braking device of the cover in the open, partially open and closed positions of figures 2a-2d;
figures 4a-4d show the elements making up the braking device illustrated in figures 3a-3d; and
figure 5 shows a detail of a device for lifting the cover.

In the figures, a recessed tower for floor-mounted electrical installations, comprising a container body 12 adapted to define a housing space 14 for modular electrical devices 16, in general connection devices such as plug sockets, TV sockets, telephone connectors and EDP connectors, normally collected into device-holder supports 17, functionally similar to the supports used with wall-mounted boxes, is wholly indicated with 10.

The housing space 14 is closed by a cover 18 adapted to take up a closed position at the level of a treadable plane, like, for example, a raised or floating floor.

The cover 18 is hinged to the container body at an edge thereof, and is adapted to take up a rotated open position, which in the currently preferred embodiment is a position near to the perpendicular arrangement with respect to the closed position, and in particular a position forming an acute angle, preferably 70°, with the closed position.

The cover is made with a rigid plastic structure and is provided, on the side facing towards the housing space 14, with a metal reinforcement plate 20 of a width equal to the width of the cover and of a thickness equal to at least 2 mm, and preferably equal to 3 mm.

The cover has a pair of side notches 22, adapted to allow the connection cables between an external device and an electrical device housed in the tower to pass through, which are closed on top, at the treadable surface, by a soft sealing insert 24, for example made from soft rubber, adapted to be removably coupled with the cover so as to be able to be replaced in the case of damage. Preferably, such an insert is provided with a plurality of ridges or ribs suitable for being forcibly inserted into respective guides formed on the plastic shape of the cover, to allow a coupling of the insert with the rigid structure of the cover that is as stable as possible, so as to prevent it from accidentally slipping away, for example due to prolonged treading on the cover.

The container body 12 comprises a base wall 25 and a pair of opposite side walls 26a, 26b. Angular support formations or shoulders 28a, 28b are arranged adjacent to the side walls 26a, 26b or integral therewith, and from the base wall 25 intermediate support formations 28c advantageously rise, in the form of middle partitions.

The reinforcement plate 20 arranged on the side of the cover facing towards the housing space, allows the treadable cover to support heavy loads, in particular to support weights of up to a few hundreds of kilograms at the centre of the cover, avoiding elastic deformations of the structure of the cover and of the frame of the container body. In the closed position of the cover it rests upon the upper surfaces of the angular shoulders 28a, 28b and of the middle partitions 28c ensuring a better distribution of the loads on the structure of the tower (i.e. on the container body).

Moreover, the arrangement of the plate 20 on the side of the cover facing towards the housing space 14 ensures that it is - with the cover in closed position - entirely inside the space itself, thus substantially preventing it from uncovering and becoming accidentally exposed in the case of wear of the treadable coating of the cover with possible danger for the people or vehicles travelling on it.

Since the arrangement of the metal reinforcement plate 20 substantially increases the weight of the cover, and its accidental closing could cause injury to an operator engaged in an intervention on the devices contained inside the tower, the tower is equipped with at least one braking device suitable for slowing down the cover in its closing travel.

In the currently preferred embodiment it is provided with a pair of brake devices 30, arranged on opposite sides of the tower adjacent to the side in which the cover is hinged to the container body.

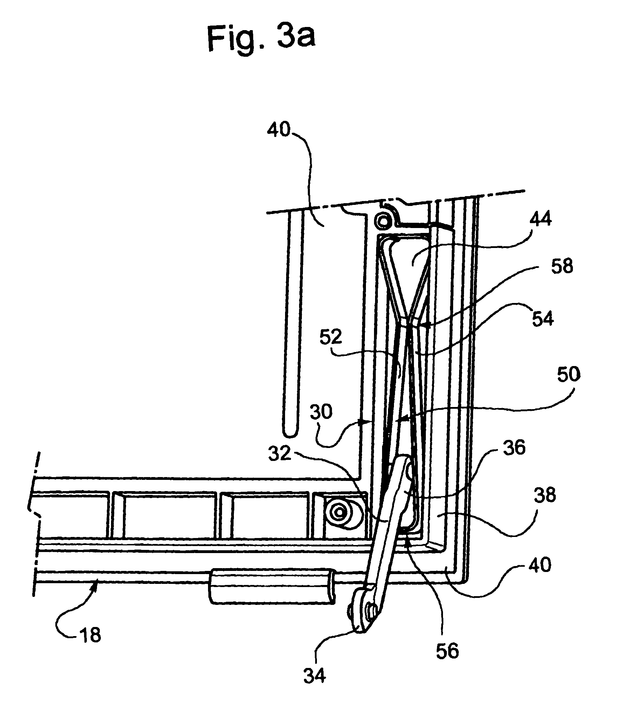

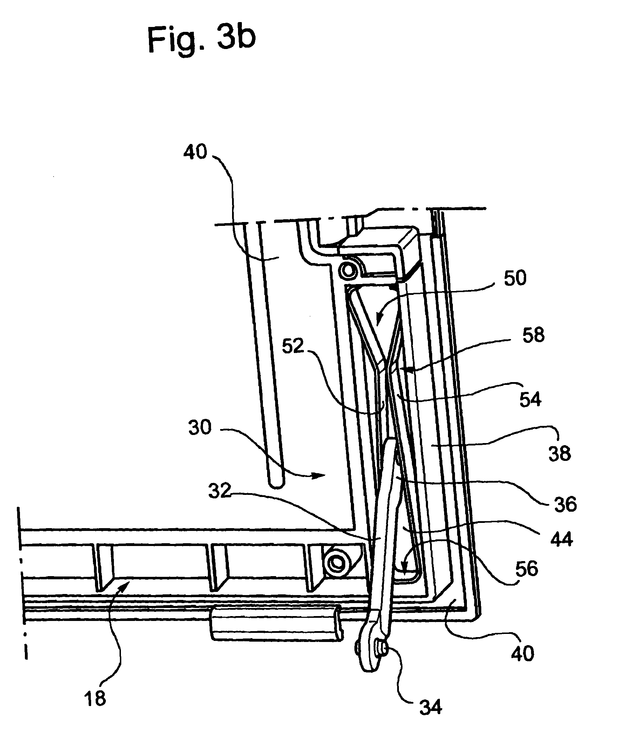

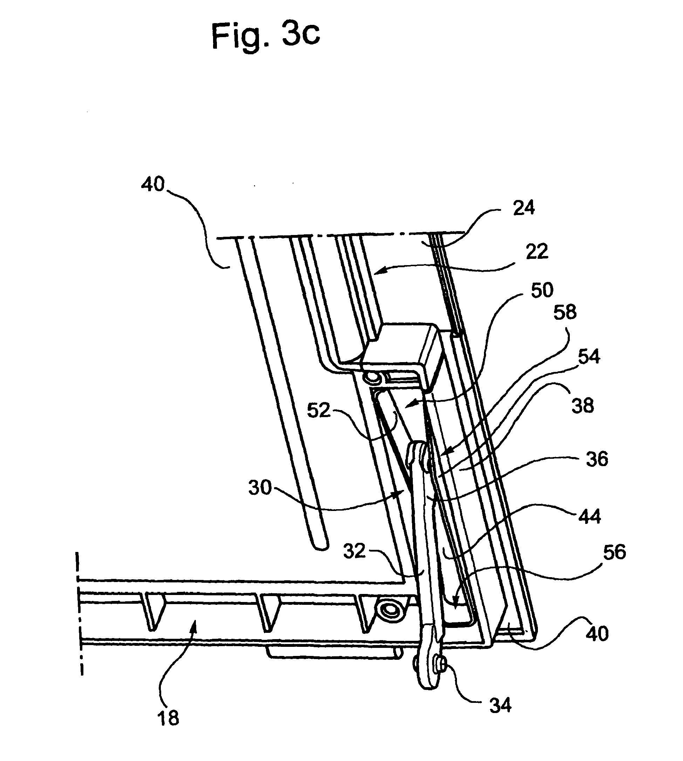

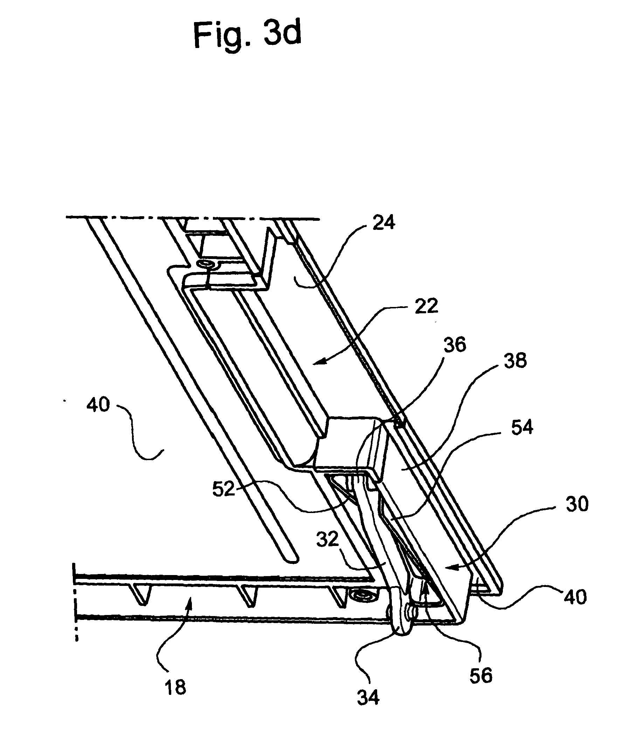

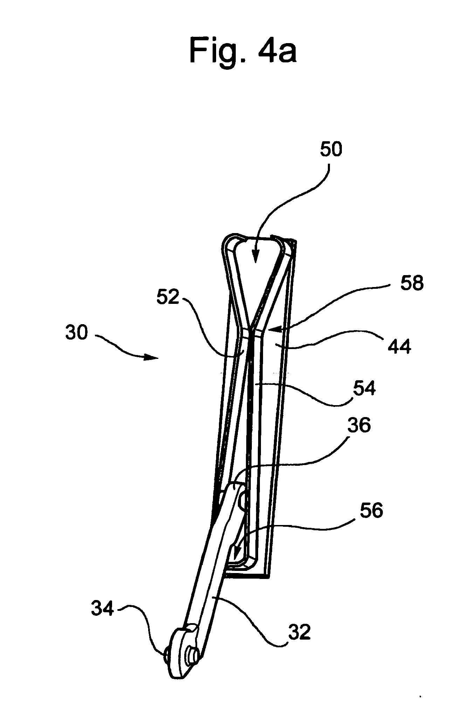

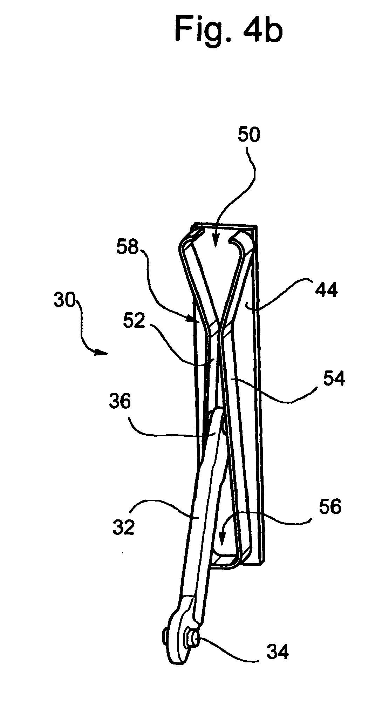

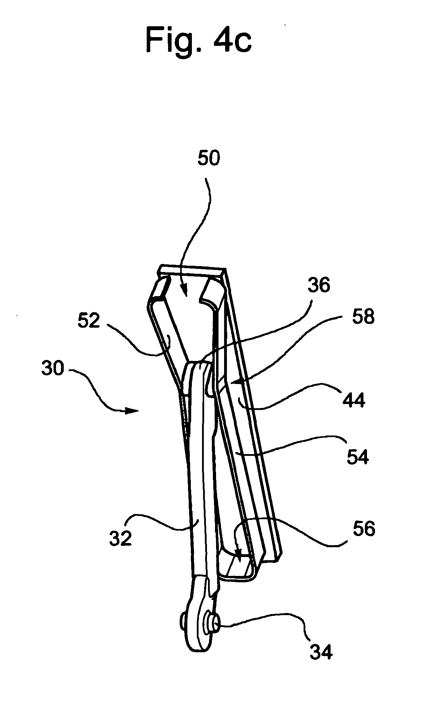

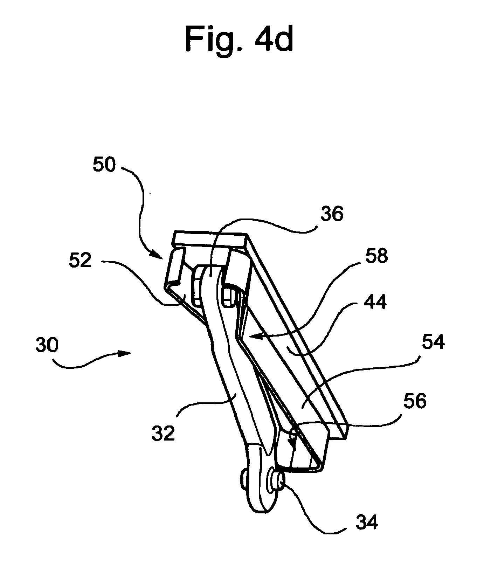

The individual braking device is described in detail here with reference to figures 3a-3d and 4a-4d, which respectively reproduce a portion of the structure of the cover 18 without the metal plate 20 for the sake of ease of illustration, and a braking device cooperating with it in the open, partially open and closed positions, as well as the elements making up such a device.

The individual braking device comprises a strut element 32 rotatably mounted, at a first end thereof 34, in a housing seat 35 formed on the container body 12 of the tower, preferably on the upper surfaces of the angular shoulders 28a, 28b, which has an elongated shape suitable for entirely receiving the strut element 32 with the cover in closed position. On the opposite side to the articulation end 34, the element 32 has a free head 36 suitable for being received in a corresponding sliding seat 38 that is parallelepiped in shape, formed in the plastic structure 40 of the cover, and preferably in abutment on the base of the seat 38.

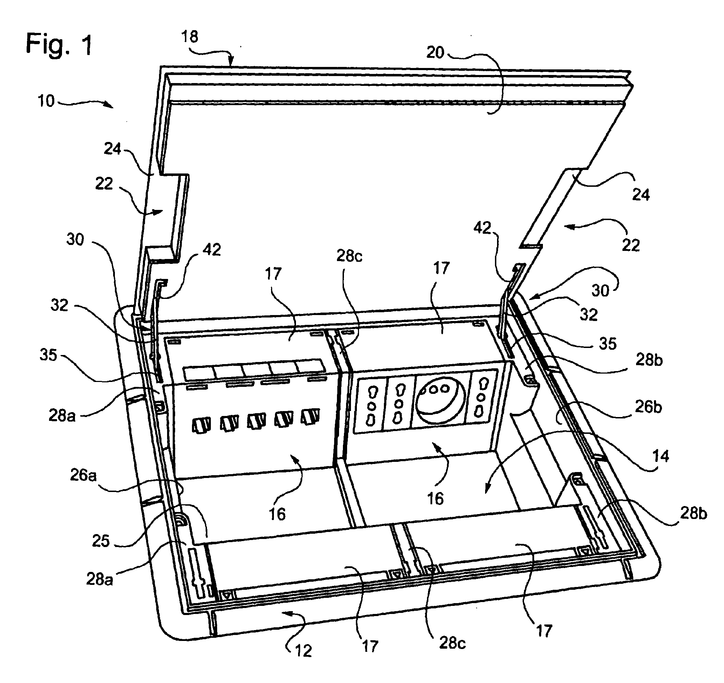

As highlighted in figure 1, the reinforcement plate 20 of the cover has corresponding slits 42 adapted to allow the strut element 32 to pass through and move in its operating travel.

The sliding seat 38 is provided, at least on its base surface, with a coating 44 of rubber or similar material adapted to have friction against the sliding of the head 36 of the strut element 32.

In the seat 38, along the direction of translation of the head of the strut element, an elastic fork element 50 is also housed, comprising a pair of elastically deformable platens 52, 54, joined at a base 56, converging along a first section up to a point of maximum proximity or stricture 58 and then diverging in the final section.

In operation, the braking device 30 is adapted to counteract the closing movement of the cover by the production of friction forces and elastic counteraction forces acting upon the strut element 32.

In its closing movement, the cover 18 pushes upon the strut element 32 through the head 36 cooperating with the seat 38, causing the rotation of the strut element around the articulation end 34 until it is completely arranged in the housing seat 35 in a rest position. During the course of such a movement, the head 36 of the strut element slides in the seat 38 with friction by virtue of the contact with the coating of the base 44, thus determining a first braking action, practically continuous along the entire closing travel of the cover.

In its sliding in the seat 38, the head of the strut element laterally cooperates with the elastic platens 52 and 54 of the fork element 50, forcing it to spread apart as, in its traverse in the seat 38, it moves closer to the stricture point 58, at the same time undergoing the elastic reaction force that acts to slow down the translation and consequently to brake the closing of the cover.

This second braking effect manifests itself with a sudden slowing down of the closing movement of the cover shortly after half of its closing travel.

Advantageously, since the presence of the reinforcement plate 20 increases the weight of the cover, the latter is provided with a retractable lifting device 60 formed on its treadable surface, preferably at the edge opposite the edge in which it is hinged to the container body.

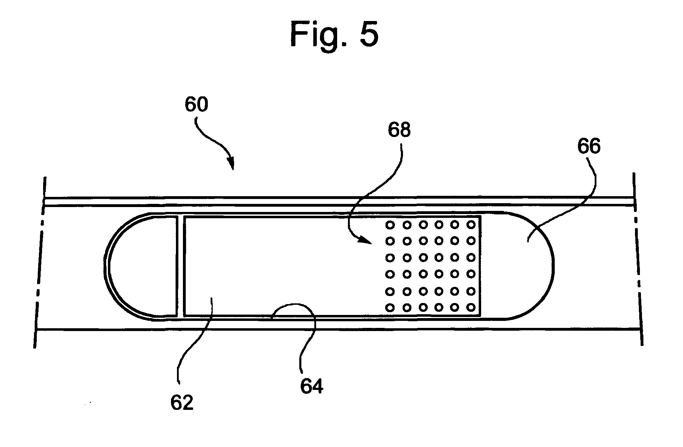

With reference to figure 5, such a device comprises a lever 62 rotatably mounted in a seat 64 formed on the treadable surface of the cover, adapted to take up a rest position in which it lies parallel to the cover and a use position in which it rises from the surface of the cover to allow it to be gripped by an operator. The lifting of the lever is made easier by the presence of a recess 66 for access to its seat, adapted to allow the introduction of a finger of an operator, and by making a corrugated portion 68 of its outer surface to make it easier to grip.

In a currently preferred embodiment, the seat for the lever also houses a locking device (not depicted) adapted to lock the cover in a closed state, comprising a latch that can translate between a position that allows it to be opened and a locking position through a key-operated actuation cylinder or, more simply, by means of a tool like a screwdriver.

It should be noted that the embodiment proposed for the present invention in the above discussion is purely a non-limiting example. A man skilled in the art can easily carry out the present invention in different embodiments that do not however depart from the principles outlined here.

This applies in particular as regards the possibility of inverting the arrangement of the braking device between container body and cover of the tower, by mounting the strut element in a housing seat formed on the cover and forming a sliding seat of its head in the plastic structure of the container body.

Without affecting the principle of the invention, the embodiments and the embodying details can be widely varied with respect to what has been described and illustrated, without for this reason departing from the scope of protection of the present invention defined by the attached claims.

## Claims

1. Tower for floor-mounted electrical installations, comprising a container body (12) adapted to define a housing space (14) for electrical devices (16) and a closing cover (18) hinged at an edge of said container body (12) and adapted to be arranged, in a closed position, at the level of a treadable plane,
said cover (18) including a metal reinforcement plate (20) arranged on the side of the cover facing towards the housing space (14),
**characterised in that** it comprises at least one broking device (30) adapted to slow down the cover (18) during the closing movement thereof.

2. Tower according to claim 1, in which said container body (12) has angular support formations adapted to form a support for said metal plate (20), which include shoulder formations (28a, 28b) adjacent to side walls (26a, 26b) of said body (12) or integral therewith.

3. Tower according to claim 1 or 2, in which said container body (12) has intermediate support formations adapted to form a support for said metal plate (20), which include middle partitions (28c) that rise from a base wall (25) of the container body (12).

4. Tower according to any one of claims 1 to 3, in which said metal reinforcement plate (20) has a thickness at least equal to or greater than two millimetres.

5. Tower according to claim 4, in which said metal reinforcement plate (20) has a thickness equal to three millimetres.

6. Tower according to claim 1, in which said cover (18) is adapted to take up a rotated open position in which it forms an acute angle with respect to its closed position.

7. Tower according to claim 1, in which said braking device (30) is arranged to counteract the closing movement of the cover (18) exerting a friction force.

8. Tower according to claim 7, in which said braking device (30) comprises a strut element (32) rotatably coupled with said container body (12) (cover (18)) and adapted to cooperate with a surface of said cover (18) (container body (12)), exerting a braking action by friction against said surface.

9. Tower according to claim 8, in which said strut element (32) has a first end (34) rotatably coupled with the container body (12), and in which said cover (18) has a sliding seat (38) adapted to receive a second free end (36) of the strut element (32), said braking action being exerted by friction between the free end (36) of the strut element (32) and said seat (38).

10. Tower according to claim 9, in which said seat has (38) at least one rubber surface (44) for contact with the free end (36) of the strut element (32).

11. Tower according to claim 9 or 10, in which said sliding seat (38) of the free end (36) of the strut element (32) has at least one elastically deformable element (50) arranged to exert an elastic counteraction force to the movement of said end (36) in the closing travel of the cover (18).

12. Tower according to claim 11, in which said elastically deformable element (50) comprises at least one leaf spring (52, 54, 56) arranged so as to progressively narrow the section of said seat (38) in the direction in which the end (36) of the strut element (32) crosses said seat (38) in the closing travel of the cover (18).

13. Tower according to any one of claims 7 to 12, comprising a pair of braking devices (30) arranged at opposite sides of the tower.

14. Tower according to any one of the previous claims, in which said cover (18) is provided with at least one retractable lifting device (60).

15. Tower according to claim 14, in which said lifting device (60) comprises a lever (62) rotatably mounted in a seat (64) formed on the treadable surface of the cover (18) and adapted to take up a rest position in which it is arranged parallel to the cover and a use position in which it rises from the surface of the cover to allow it to be gripped by an operator.

16. Tower according to claim 15, in which the seat (64) of said lever (62) carries a locking device adapted to lock the cover in a closed condition.

## Patentansprüche

1. Turm für im Boden montierte elektrische Installationen, umfassend einen Behälterkörper (12), welcher dazu eingerichtet ist, einen Gehäuseraum (14) für elektrische Vorrichtungen (16) zu definieren, und einen Verschlussdeckel (18), welcher klappbar an einem Rand des Behälterkörpers (12) angebracht ist, und welcher dazu eingerichtet ist, in einer geschlossenen Position auf dem Niveau einer betretbaren Ebene angeordnet zu sein, wobei der Deckel (18) eine Verstärkungs-Metallplatte (20) umfasst, welche an der Seite des Deckels angeordnet ist, welche in Richtung des Gehäuseraums (14) zeigt,
**dadurch gekennzeichnet, dass** er wenigstens eine Bremsvorrichtung (30) umfasst, welche dazu eingerichtet ist, den Deckel (18) während seiner Schließbewegung zu verlangsamen.

2. Turm nach Anspruch 1, wobei der Behälterkörper (12) eckige Stützanordnungen aufweist, welche dazu eingerichtet sind, eine Abstützung für die Metallplatte (20) zu bilden, welche Schulteranordnungen (28a, 28b) benachbart zu Seitenwänden (26a, 26b) des Körpers (12) oder integral damit umfassen.

3. Turm nach Anspruch 1 oder 2, wobei der Behälterkörper (12) Zwischen-Stützanordnungen aufweist, welche dazu eingerichtet sind, eine Abstützung für die Metallplatte (20) zu bilden, welche sich von einer Grundwand (25) des Behälterkörpers (12) erhebende Mittel-Trennwände (28c) umfassen.

4. Turm nach einem der Ansprüche 1 bis 3, wobei die Verstärkungs-Metallplatte (20) eine Dicke, welche wenigstens gleich zwei Millimeter oder mehr ist, aufweist.

5. Turm nach Anspruch 4, wobei die Verstärkungs-Metallplatte (20) eine Dicke, welche gleich drei Millimeter ist, aufweist.

6. Turm nach Anspruch 1, wobei der Deckel (18) dazu eingerichtet ist, eine rotierte offene Position einzunehmen, in welchem er einen spitzen Winkel bezüglich seiner geschlossenen Position bildet.

7. Turm nach Anspruch 1, in welchem die Bremsvorrichtung (30) dazu angeordnet ist, der Schließbewegung des Deckels (18) entgegenzuwirken, indem sie eine Reibungskraft ausübt.

8. Turm nach Anspruch 7, wobei die Bremsvorrichtung (30) ein Strebenelement (32) aufweist, welches rotierbar mit dem Behälterkörper (12) (Deckel (18)) gekoppelt und dazu eingerichtet ist, mit einer Fläche des Deckels (18) (Behälterkörper (12)) zusammenzuwirken, wobei eine Bremswirkung durch Reibung auf die Fläche ausgeübt wird.

9. Turm nach Anspruch 8, wobei das Strebenelement (32) ein erstes Ende (34) aufweist, welches rotierbar mit dem Behälterkörper (12) gekoppelt ist, und wobei der Deckel (18) einen Gleitsitz (38) aufweist, welcher dazu eingerichtet ist, ein zweites freies Ende (36) des Strebenelements (32) aufzunehmen, wobei die Bremswirkung durch Reibung zwischen dem freien Ende (36) des Strebenelements (32) und dem Sitz (38) ausgeübt wird.

10. Turm nach Anspruch 9, wobei der Sitz (38) wenigstens eine Gummifläche (44) für Kontakt mit dem freien Ende (36) des Strebenelements (32) aufweist.

11. Turm nach Anspruch 9 oder 10, wobei der Gleitsitz (38) des freien Endes (36) des Strebenelements (32) wenigstens ein elastisch verformbares Element (50) aufweist, welches dazu eingerichtet ist, eine elastische Gegenwirk-Kraft auf die Bewegung des Endes (36) in dem Schließhub des Deckels (18) auszuüben.

12. Turm nach Anspruch 11, wobei des elastisch verformbare Element (50) wenigstens eine Blattfeder (52, 54, 56) umfasst, welche dazu eingerichtet ist, das Profil des Sitzes (38) in der Richtung, in welcher das Ende (36) des Strebenelements (32) den Sitz (38) während der Schließbewegung des Deckels (18) kreuzt, zunehmend zu verengen.

13. Turm nach einem der Ansprüche 7 bis 12, umfassend ein Paar von Bremsvorrichtungen (30), welche an gegenüberliegenden Seiten des Turms angeordnet sind.

14. Turm nach einem der vorhergehenden Ansprüche, wobei der Deckel (18) mit wenigstens einer zurückziehbaren Hebevorrichtung (60) bereitgestellt ist.

15. Turm nach Anspruch 14, wobei die Hebevorrichtung (60) einen Hebel (62) umfasst, welcher rotierbar in einem an der betretbaren Fläche des Deckels gebildeten Sitz (64) montiert und dazu eingerichtet ist, eine Ruheposition, in welcher er parallel zu dem Deckel angeordnet ist, und eine Verwendungs-Position einzunehmen, in welcher er sich von der Fläche des Deckels erhebt, um es ihm zu erlauben, von einem Bediener gegriffen zu werden.

16. Turm nach Anspruch 15, wobei der Sitz (64) des Hebels (62) eine Sperrvorrichtung trägt, welche dazu eingerichtet ist, den Deckel in einem geschlossenen Zustand zu sperren.

## Revendications

1. Boîtier pour installations électriques montées dans le sol, comprenant un corps de coffret (12) adapté pour définir un espace de logement (14) pour des dispositifs électriques (16) et un couvercle de fermeture (18) articulé sur un bord dudit corps de coffret (12) et adapté pour être disposé, dans une position fermée, au niveau d'un plan sur lequel on peut marcher,
ledit couvercle (18) comprenant une plaque de renforcement métallique (20) placée sur le côté du couvercle qui fait face à l'espace de logement (14),
**caractérisé en ce qu'**il comprend au moins un dispositif de freinage (30) adapté pour ralentir le couvercle (18) pendant le mouvement de fermeture de ce dernier.

2. Boîtier selon la revendication 1, dans lequel ledit corps de coffret (12) comporte des formations de support angulaire adaptées pour former un support pour ladite plaque métallique (20), qui comprennent des formations d'épaulement (28a, 28b) adjacentes aux parois latérales (26a, 26b) dudit corps (12) ou intégrées à celles-ci.

3. Boîtier selon la revendication 1 ou 2, dans lequel ledit corps de coffret (12) comporte des formations de support intermédiaires adaptées pour former un support pour ladite plaque métallique (20), qui comprennent des cloisons médianes (28c) qui se dressent depuis une paroi de base (25) du corps de coffret (12).

4. Boîtier selon l'une quelconque des revendications 1 à 3, dans lequel ladite plaque de renforcement métallique (20) a une épaisseur supérieure ou égale à deux millimètres.

5. Boîtier selon la revendication 4, dans lequel ladite plaque de renforcement métallique (20) a une épaisseur égale à trois millimètres.

6. Boîtier selon la revendication 1, dans lequel ledit couvercle (18) est adapté pour prendre une position ouverte après rotation dans laquelle il forme un angle aigu par rapport à sa position fermée.

7. Boîtier selon la revendication 1, dans lequel ledit dispositif de freinage (30) est adapté pour contrebalancer le mouvement de fermeture du couvercle (18) en exerçant une force de frottement.

8. Boîtier selon la revendication 7, dans lequel ledit dispositif de freinage (30) comprend un élément formant jambe de force (32) accouplé à rotation audit corps de coffret (12) (couvercle (18)) et adapté pour coopérer avec une surface dudit couvercle (18) (corps de coffret (12)), exerçant une action de freinage par friction contre ladite surface.

9. Boîtier selon la revendication 8, dans lequel ledit élément formant jambe de force (32) a une première extrémité (34) accouplée à rotation au corps de coffret (12), et dans lequel ledit couvercle (18) comporte un siège glissant (38) adapté pour recevoir une deuxième extrémité libre (36) de l'élément formant jambe de force (32), ladite action de freinage étant exercée par frottement entre l'extrémité libre (36) de l'élément formant jambe de force (32) et ledit siège (38).

10. Boîtier selon la revendication 9, dans lequel ledit siège a (38) au moins une surface en caoutchouc (44) pour le contact avec l'extrémité libre (36) de l'élément formant jambe de force (32).

11. Boîtier selon la revendication 9 ou 10, dans lequel ledit siège glissant (38) de l'extrémité libre (36) de l'élément formant jambe de force (32) comporte au moins un élément déformable élastiquement (50) agencé pour exercer une force de contrebalancement élastique sur le déplacement de ladite extrémité (36) dans le trajet de fermeture du couvercle (18).

12. Boîtier selon la revendication 11, dans lequel ledit élément déformable élastiquement (50) comprend au moins un ressort à lame (52, 54, 56) agencé pour rétrécir progressivement la section dudit siège (38) dans la direction dans laquelle l'extrémité (36) de l'élément formant jambe de force (32) croise ledit siège (38) dans le trajet de fermeture du couvercle (18).

13. Boîtier selon l'une quelconque des revendications 7 à 12, comprenant une paire de dispositifs de freinage (30) placés sur des côtés opposés du boîtier.

14. Boîtier selon l'une quelconque des revendications précédentes, dans lequel ledit couvercle (18) est pourvu d'au moins un dispositif de levage rétractable (60).

15. Boîtier selon la revendication 14, dans lequel ledit dispositif de levage (60) comprend un levier (62) monté à rotation dans un siège (64) formé sur la surface sur laquelle on peut marcher du couvercle (18) et adapté pour prendre une position de repos dans laquelle il est parallèle au couvercle et une position d'utilisation dans laquelle il se dresse depuis la surface du couvercle pour lui permettre d'être saisi par un opérateur.

16. Boîtier selon la revendication 15, dans lequel le siège (64) dudit levier (62) porte un dispositif de verrouillage adapté pour bloquer le couvercle dans une position fermée.
